# EUROPÄISCHE PATENTANMELDUNG

(11) **EP 2 939 510 A1**
(43) Veröffentlichungstag der Anmeldung: **04.11.2015**
(21) Anmeldenummer: 15401032.6
(22) Anmeldetag: 27.04.2015
(51) Int. Cl.: A01B 79/00, A01C 17/00

(54) **VERFAHREN ZUM AUSBRINGEN VON DÜNGER AUF EINEM FELD MIT EINEM DÜNGERTSTREUER**

(30) Priorität: 30.04.2014 DE 102014106050
(71) Anmelder: Amazonen-Werke H. Dreyer GmbH & Co. KG, 49205 Hasbergen (DE)
(72) Erfinder:

(57) **Zusammenfassung**

Verfahren zur Ausbringung von Dünger auf einem Feld (1) mit einem Düngerstreuer (4), wobei für einen ersten Fahrabschnitt (A) die ausgebrachte Düngermenge ortsabhängig aufgezeichnet wird, dadurch gekennzeichnet, dass für einen weiteren Fahrabschnitt (B) in wenigstens einer Überlappungszone (6) mit dem ersten Fahrabschnitt (A) eine akkumulierte Düngermenge berechnet wird, und dass beim Überschreiten eines zulässigen Düngemittelgrenzwerts in der Überlappungszone (6) einer Bedienperson ein Warnsignal angezeigt und/oder die Verteilcharakteristik (5a - 5g) des Düngerstreuers (4) automatisch angepasst oder die Düngung automatisch abgeschaltet wird.

## Beschreibung

Die Erfindung betrifft ein Verfahren zur Ausbringung von Dünger auf einem Feld mit einem Düngerstreuer gemäß dem Oberbegriff von Anspruch 1.

Bei derartigen Verfahren wird das Feld mit dem Düngerstreuer in parallelen Fahrgassen abgefahren, die zueinander in einem vorbestimmten Arbeitsabstand verlaufen. Hierbei ist der Düngerstreuer beispielsweise am Heck eines Schleppers befestigt oder wird von diesem gezogen. Beim Erreichen des jeweiligen Endes einer Fahrgasse wendet der Schlepper mit dem Düngerstreuer innerhalb des Vorgewendes in die benachbarte Fahrgasse hinein und setzt dort die Düngung fort. Vor oder nach dem Abfahren der parallelen Fahrgassen wird zusätzlich das Vorgewende entlang einer zusätzlichen Fahrgasse abgefahren und gedüngt.

Der Düngerstreuer ist beispielsweise als Zentrifugal- bzw. Schleuderdüngerstreuer ausgebildet, wobei Dünger aus einem Vorratsbehälter mit einer Dosiereinheit auf wenigstens einer rotierenden Schleuderscheibe aufgebracht und mit deren Schaufeln auf dem Feld verteilt wird. Der so erzeugte Streufächer verläuft hinter dem Düngerstreuer und weist üblicherweise eine nierenförmige Verteilcharakteristik auf. Zur Veränderung der Verteilcharakteristik kann die Rotationsgeschwindigkeit der Schleuderscheibe, die Länge oder Winkelstellung der Wurfschaufeln und/oder die Auflagefläche des Düngers auf der Schleuderscheibe verändert werden.

Üblicherweise wird bei derartigen Schleuderdüngerstreuern der Dünger bis hin zu den beiden benachbarten Fahrgassen, also über zwei Arbeitsbreiten hinweg verteilt. Dadurch wird das Feld zunächst entlang eines ersten Fahrabschnitts bedüngt und anschließend entlang eines weiteren Fahrabschnitts, wobei sich eine Überlappungszone zwischen beiden Fahrabschnitten ergibt, in dem die Verteilung des Düngers besonders gleichmäßig ist. Nachteilig dabei ist, dass sich beispielsweise im Vorgewende Überlappungszonen mit einer lokalen Über- oder Unterdüngung ausbilden können.

Aus der EP 2 596 695 A1 ist hierzu bekannt, die Dosiereinheiten bei der Fahrt aus dem Feld in das Vorgewende und bei der Fahrt vom Vorgewende in das Feld hinein basierend auf der Streucharakteristik des Streufächers und einer GPS-Ortung aus- und einzuschalten. Dadurch wird verhindert, dass der Übergangsbereich über- oder unterdüngt wird. Allerdings ist es weiterhin möglich, dass bei einem schrägen Verlauf des Vorgewendes zu den Fahrspuren im Feld eine Über- oder Unterdüngung einzelner Bereiche erfolgt.

Zur Lösung dieses Problems schlägt die DE 10 2011 052397 A1 vor, basierend auf einem georeferenzierten Verteilprogramm die Verteilcharakteristik des Düngerstreuers im Übergang zum Vorgewende zu verstellen.

Nachteilig dabei ist, dass trotz der optimierten Düngerverteilung einzelne Teilflächen weiterhin überdüngt werden können, so dass der von den Pflanzen nicht aufgenommene Dünger ausgewaschen wird und zu Umweltschäden führt. Des Weiteren können gesetzliche Grenzwerte dabei überschritten werden.

Die EP 0 843 958 B1 offenbart ein Verfahren, bei dem der Ausbringvorgang entsprechend einer Applikationskarte erfolgt und die tatsächlich auf dem Feld ausgebrachte Menge während des Ausbringvorgangs standortspezifisch mit Hilfe einer satellitengestützten Positionsbestimmung auf einem Medium aufgezeichnet wird. Allerdings ist es hiermit lediglich möglich, im Vorhinein die Verteilcharakteristik des Düngerstreuers zu planen.

Aufgabe der vorliegenden Erfindung ist es daher, ein Verfahren zur Ausbringung von Dünger auf einem Feld mit einem Düngerstreuer bereitzustellen, mit dem Umweltschäden und/oder die Überschreitung von Düngemittelgrenzwerten verhindert werden.

Diese Aufgabe wird bei einem Verfahren zur Ausbringung von Dünger auf einem Feld mit einem Düngerstreuer mit den Merkmalen des Oberbegriffs von Anspruch 1 mit den Merkmalen des kennzeichnenden Teils gelöst, gemäß dem für einen weiteren Fahrabschnitt in wenigstens einer Überlappungszone mit dem ersten Fahrabschnitt eine akkumulierte Düngermenge berechnet wird und dass beim Überschreiten eines zulässigen Düngemittelgrenzwerts in der Überlappungszone einer Bedienperson ein Warnsignal angezeigt und/oder die Verteilcharakteristik des Düngerstreuers automatisch angepasst oder die Düngung automatisch abgeschaltet wird.

Durch die Aufzeichnung der ausgebrachten Düngermenge für den ersten Fahrabschnitt ist also die örtliche Verteilung des Düngers in diesem Bereich bekannt. Bei der anschließenden Düngung in einem weiteren Fahrabschnitt wird beispielsweise im Bereich des Vorgewendes der Dünger in den Überlappungszonen beider Fahrabschnitte akkumuliert. Dadurch, dass bei dem Verfahren die akkumulierte Düngermenge in den Überlappungszonen berechnet wird, ist dort ortsabhängig die Düngerverteilung bekannt. Da weiterhin beim Überschreiten des zulässigen Düngermittelgrenzwerts in den Überlappungszonen die Bedienperson gewarnt, die Verteilcharakteristik automatisch angepasst oder die Düngung automatisch abgeschaltet wird, werden Umweltschäden oder die Überschreitung von gesetzlichen Grenzwerten verhindert.

Ein Schlepper kann dafür vorgesehen sein, den Düngerstreuer entlang von Feldgassen zu ziehen oder zu transportieren. Ein Fahrabschnitt kann einen Abschnitt einer Feldgasse und/oder ein Bereich des Feldes auf einer oder beiden Seiten der Feldgasse umfassen. Die Fahrtrichtung des Düngerstreuers kann parallel zu einer Feldgasse bzw. einem Fahrabschnitt sein. Der Düngerstreuer kann als Schleuderdüngerstreuer bzw. Zentrifugalstreuer mit ein oder zwei Schleuderscheiben ausgebildet sein. An dem Düngerstreuer kann ein Vorratsbehälter angeordnet sein, aus dem der Dünger über Rohrleitungen und/oder eine Dosiereinheit auf die Schleuderscheibe aufgebracht wird. Auf der Schleuderscheibe können Schaufeln angeordnet sein, mittels derer über eine Rotationsbewegung der Schleuderscheibe der Dünger im Wesentlichen hinter dem Schleuderdüngerstreuer auf dem Feld verteilt wird. Der Streufächer kann eine kreisförmige, ellipsenförmige oder eine nierenförmige Verteilcharakteristik aufweisen. Die "Verteilcharakteristik des Streufächers" kann hier eine ortsaufgelöste Verteilung der Düngermenge auf dem Feld sein.

Dass die ausgebrachte Düngermenge ortsabhängig aufgezeichnet wird, kann hier bedeuten, dass das Feld in zellenartige Teilflächen unterteilt wird und die Düngermenge pro Teilfläche aufgezeichnet wird. "Ortsabhängig" kann hier bedeuten, dass es sich um eine Ortsabhängigkeit auf dem Feld handelt.

Wenigstens ein Teil der Fahrgassen können parallel zueinander auf dem Feld angeordnet sein. Wenigstens eine weitere Fahrgasse kann die Enden der zuvor genannten parallelen Fahrgassen miteinander verbinden, insbesondere im Bereich eines Vorgewendes. Das Vorgewende kann dazu vorgesehen sein, dass der Düngerstreuer von einer der parallelen Fahrgassen zur nächsten wendet.

"Überlappungszone" kann hier bedeuten, dass der erste Fahrabschnitt mit dem weiteren Fahrabschnitt in diesem Bereich überlappt. Dass die akkumulierte Düngermenge berechnet wird, kann hier bedeuten, dass die Düngermengen, welche bei der Düngung des ersten Fahrabschnitts jeweils auf die einzelnen Teilflächen der Überlappungszone abgegeben wurden mit den jeweiligen gerade oder zukünftig abgegebenen Düngermengen für die gleichen Teilflächen addiert wird (Integration der Düngermenge auf den Teilflächen).

"Überschreiten eines zulässigen Düngermittelgrenzwerts in der Überlappungszone" kann hier bedeuten, dass für wenigstens eine Teilfläche in der Überlappungszone der zulässige Düngermittelgrenzwert überschritten wird. Der zulässige Düngermittelgrenzwert kann ein Grenzwert einer gesetzlichen Norm, einer Verordnung oder eines Gesetzes sein. Ebenso ist denkbar, dass es sich bei dem zulässigen Düngermittelgrenzwert um einen freiwilligen Grenzwert handelt, beispielweise wenn es sich um eine besonders ökologisch verträgliche Landwirtschaft handelt.

Das Warnsignal kann ein akustisches oder ein optisches Warnsignal sein, beispielsweise eine rote Warnfläche auf der Anzeige des Bordcomputers oder eine Warnlampe. Dass die Verteilcharakteristik des Düngerstreuers automatisch angepasst wird, kann hier bedeuten, dass die Rotationsgeschwindigkeit der Schleuderscheibe, die Länge oder Winkelstellung der Wurfarme und/oder der Ort oder die Größe der Aufgabefläche des Düngers auf der Streuscheibe verändert wird. Ebenso kann dies bedeuten, dass Leitflächenelemente (Limiter) verstellt werden, die den Dünger nach der Streuscheibe umlenken.

Die Verteilcharakteristik kann abhängig vom Düngertyp, der Rotationsgeschwindigkeit der Streuscheibe, der Länge oder Winkelstellung der Wurfschaufeln, dem Ort oder der Größe der Aufgabefläche des Düngers auf der Schleuderscheibe und/oder von der Stellung von Leitflächenelementen im Bordcomputer und/oder in einer Datenbank hinterlegt sein.

Bei der Aufzeichnung der ausgebrachten Düngermenge kann die Verteilcharakteristik, der Ort und/oder die Orientierung des Düngerstreuers auf dem Feld zeitauflösend aufgezeichnet und daraus die ausgebrachte Düngermenge berechnet werden. Dadurch ist es möglich, die örtliche Bewegung der Verteilcharakteristik über das Feld zu bestimmen und daraus mittels Integration die auf den Teilflächen jeweils aufgegebene Düngermenge zu berechnen. Durch die Aufzeichnung derartiger Rohdaten ist es weiterhin auch möglich, spätere Analysen des Ausbringvorgangs zu erstellen.

Bei der Aufzeichnung der ausgebrachten Düngermenge kann der Ort und/oder die Orientierung des Düngerstreuers auf dem Feld mit einem satellitengestützten Ortungssystem erfasst werden. Da derartige satellitengestützte Ortungssysteme (GPS-System) bereits in Landmaschinen weit verbreitet sind, können diese ohne zusätzliche Kosten für die Aufzeichnung eingesetzt werden.

Das satellitengestützte Ortungssystem kann die Positionskoordinaten einer landwirtschaftlichen Zugmaschine erfassen und daraus kann über einen Korrekturwert der Ort und/oder die Orientierung des Düngerstreuers berechnet werden. Dadurch ist es nicht notwendig, den Ort und/oder die Orientierung des Düngerstreuers direkt zu messen, sondern über ein Ortungssystem an der Zugmaschine abzuleiten. Der Korrekturvektor kann die Distanz und die Richtung zwischen dem satellitengestützten Ortungssystem und einem Koordinatensystem der Verteilcharakteristik des Düngerstreuers umfassen. Ebenso kann es sich hier um eine Distanz und eine Richtung zwischen dem satellitengestützten Ortungssystem und einem Koordinatensystem des Düngerstreuers handeln.

Die akkumulierte Düngermenge in der Überlappungszone kann über einen vorherbestimmten Fahrweg und eine vorherbestimmte Verteilcharakteristik des Düngerstreuers berechnet werden. Dadurch kann die Überschreitung des Düngemittelgrenzwerts vorausgesagt und die Verteilcharakteristik bzw. auch der Fahrweg entsprechend angepasst werden. "Vorherbestimmter Fahrweg" bzw. "vorherbestimmte Verteilcharakteristik" kann hier bedeuten, dass der Fahrweg und/oder die Verteilcharakteristik beispielsweise über eine Planungssoftware für den weiteren Fahrabschnitt im Voraus berechnet werden.

Das Überschreiten des zulässigen Düngemittelgrenzwerts kann für die Überlappungszone vorherbestimmt und der Bedienperson als Vorhersage angezeigt werden. Dadurch kann die Bedienperson den Fahrweg und/oder die Verteilcharakteristik im Voraus geeignet anpassen, damit der zulässige Düngemittelgrenzwert nicht überschritten wird und eine möglichst gleichmäßige Verteilung des Düngers auf dem Feld erfolgt.

Der Düngerstreuer kann ein Zentrifugalstreuer sein, der insbesondere den Dünger aus einem Vorratsbehälter mittels einer Schleuderscheibe auf dem Feld ausbringt.

Darüber hinaus stellt die Erfindung einen Bordcomputer für eine landwirtschaftliche Zugmaschine nach dem Anspruch 8 bereit, der zur Durchführung des Verfahrens nach wenigstens einem der Ansprüche 1 - 7 ausgebildet ist. Dadurch kann das Verfahren zur Ausbringung von Dünger auf einem Feld mit einem Düngerstreuer als Computerprogramm in dem Bordcomputer automatisiert ausführbar sein. Darüber hinaus ist denkbar, dass das Computerprogramm auf einem Datenträger bereitgestellt wird.

Der Bordcomputer kann mit einem Anzeigeelement zur Anzeige des Warnsignals und/oder einem Steuermodul zur automatischen Anpassung der Verteilcharakteristik und/oder zur automatischen Abschaltung des Düngerstreuers ausgebildet sein. Dadurch können die einzelnen Maßnahmen zur Verhinderung der Grenzwertüberschreitung zentral von dem Bordcomputer ausgeführt werden. Das Anzeigeelement kann ein Bildschirm, eine Leuchte oder eine LED sein. Der Bordcomputer kann darüber hinaus eine Tastatur, eine Speichereinheit, eine Datenschnittstelle und/oder einen Mikroprozessor umfassen.

Weitere Merkmale und Vorteile der Erfindung werden nachfolgend anhand der beispielhaften Figuren erläutert. Dabei zeigt:
- Fig. 1: ein erstes Ausführungsbeispiel des Verfahrens beim Ausbringen von Dünger auf einem Feld mit einem Düngerstreuer in einer Draufsicht;
- Fig. 2: ein zweites Ausführungsbeispiel des Verfahrens zur Ausbringung von Dünger auf einem Feld in einer Draufsicht; und
- Fig. 3: ein drittes Ausführungsbeispiel des Verfahrens zur Ausbringung von Dünger auf einem Feld in einer Draufsicht.

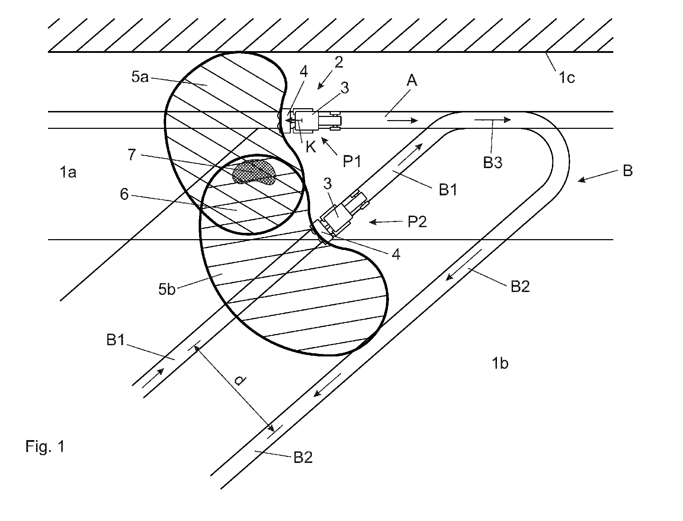

In der Fig. 1 ist ein erstes Ausführungsbeispiel des Verfahrens zur Ausbringung von Dünger auf einem Feld 1 mit einem Düngerstreuer 4 in einer Draufsicht dargestellt. Der Düngerstreuer 4 ist als Zentrifugalstreuer ausgebildet, der den Dünger aus einem Vorratsbehälter mittels eines Dosierorgans auf eine Schleuderscheibe verteilt und damit auf das Feld 1 aufbringt.

Zu sehen ist ein Feld 1 mit einem zentralen Bereich 1 b, einem Vorgewende 1 a und einer Feldgrenze 1 c. Zunächst fährt das Gespann 2 mit dem landwirtschaftlichen Schlepper 3 (Traktor) und dem Düngerstreuer 4 das Vorgewende 1 a parallel zur Feldgrenze 1 c im ersten Fahrabschnitt A ab. Hier ist der Düngerstreuer beispielsweise an der Position P₁ mit der Verteilcharakteristik 5a im Grenzstreubetrieb gezeigt. Diese Verteilcharakteristik ist asymmetrisch ausgebildet, wobei kein Dünger über die Feldgrenze 1 c hinaus gelangt. Bei der Fahrt des Düngerstreuers entlang des ersten Fahrabschnitts A wird die ausgebrachte Düngermenge ortsabhängig aufgezeichnet. Dazu wird einerseits die Verteilcharakteristik 5a sowie der Ort und die Fahrtrichtung des Düngerstreuers 4 zeitauflösend aufgezeichnet. Um daraus die Düngermenge zu berechnen, wird das Feld 1 in Flächenelemente unterteilt (beispielsweise ein Gitter). Die einzelnen Flächenelemente sind dabei so klein gewählt, dass die Verteilcharakteristik 5a bzw. 5b mehrere Flächenelemente überdeckt, beispielsweise 10 oder 100. Je mehr Flächenelemente gewählt werden, desto höher ist die Ortsauflösung und desto geringer ist die statistische Erfassungsgenauigkeit in den einzelnen Flächenelementen.

Dadurch ist es also möglich, auf beiden Seiten der Fahrgasse im Bereich des ersten Fahrabschnitts A die ausgebrachte Düngermenge ortsauflösend zu berechnen.

Anschließend fährt der Schlepper 3 mit dem Düngerstreuer 4 die parallelen Fahrgassen im Zentralbereich 1 b des Feldes 1 ab. Die Fahrgassen haben zueinander den Arbeitsabstand d. Die Verteilcharakteristik 5b des Düngerstreuers 4 ist dabei so eingestellt, dass die Arbeitsbreite in etwa zwei Arbeitsabstände d überstreicht, wodurch der Bereich zwischen den Fahrgassen besonders gleichmäßig von beiden Seiten her bedüngt wird.

Zu sehen ist, dass mit dem Düngerstreuer 4 der Fahrabschnitt B der parallelen Fahrgassen gedüngt wird. Bei den Teilabschnitten B₁ und B₂ handelt es sich um den Übergangsbereich der parallelen Fahrgassen in das Vorgewende, wobei diese zum Wenden mit einem Teilabschnitt B₃ verbunden sind. Des Weiteren ist zu sehen, dass sich die Verteilcharakteristik 5b im Bereich des weiteren Fahrabschnitts B in der Überlappungszone 6 mit der Verteilcharakteristik 5a des ersten Fahrabschnitts A überschneidet. Folglich wird also in diesem Bereich die Fläche doppelt gedüngt und es kann zur Überschreitung eines zulässigen Düngemittelgrenzwerts im Bereich der Zone 7 kommen.

Um dies zu verhindern, wird die Position des Düngerstreuers 4 während der Fahrt entlang des weiteren Fahrabschnitts B sowie die Verteilcharakteristik 5b fortwährend aufgezeichnet. Darüber hinaus wird genauso wie im ersten Fahrabschnitt A auch im weiteren Fahrabschnitt B unmittelbar berechnet, wie viel Düngermenge sich nun zusätzlich in den einzelnen Flächenelementen des Feldes 1 akkumuliert hat. Überschreitet nun eines dieser Flächenelemente den zulässige Düngemittelgrenzwert, so wird die Bedienperson der Zugmaschine 3 durch ein Warnsignal entsprechend informiert. Darüber hinaus erfolgt eine automatische Abschaltung des Düngerstreuers 4. Des Weiteren erfolgt eine Berechnung, an welchem Ort des Fahrabschnitts B der Düngerstreuer mit der Verteilcharakteristik 5b wieder aktiviert werden kann, ohne dass eine Überschreitung des Düngemittelgrenzwerts zu erwarten ist.

Die Ortung des Düngerstreuers 4 erfolgt über ein satellitengestütztes Ortungssystem, das hier als GPS-System ausgebildet ist. Da die Antenne des satellitengestützten Ortungssystems an dem Schlepper 3 angeordnet ist, wird folglich auch zunächst dessen Position ermittelt und nicht die des Düngerstreuers 4. Dazu wird ausgehend von der Position des Schleppers 3 und dessen Fahrtrichtung über den Korrekturvektor K der Ort und die Orientierung des Düngerstreuers 4 berechnet. Da der Düngerstreuer 4 fest mit der Zugmaschine 3 verbunden ist, ändert sich der Korrekturvektor K während der Ausbringung des Düngers nicht. Denkbar ist allerdings auch, dass der Düngerstreuer 4 über ein Gelenk an die Zugmaschine 3 angebunden ist und der Korrekturvektor K kontinuierlich über die Erfassung des Gelenkwinkels ermittelt wird.

Dadurch, dass mit dem Verfahren die akkumulierte Düngermenge kontinuierlich berechnet wird und dadurch die Überschreitung eines zulässigen Düngemittelgrenzwerts in der Zone 7 ermittelt wird, kann eine Schädigung der Umwelt bzw. eine Überschreitung gesetzlicher Grenzwerte einfach und effektiv verhindert werden.

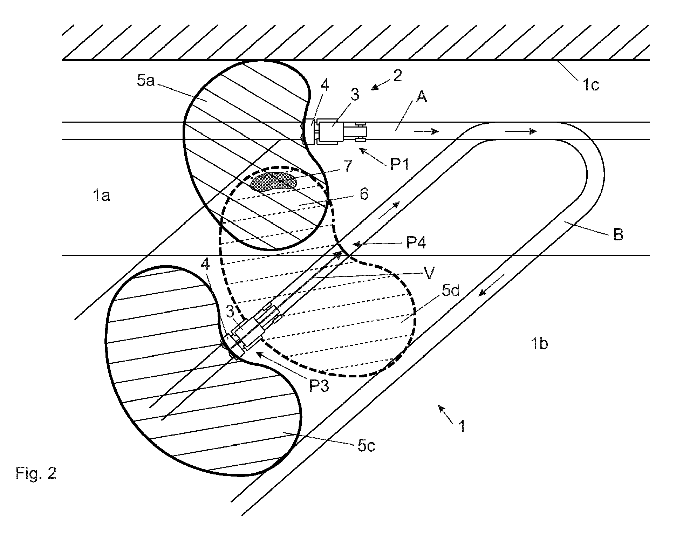

In der Fig. 2 ist ein zweites Ausführungsbeispiel des Verfahrens zur Ausbringung von Dünger auf dem Feld 1 mit dem Düngerstreuer 4 dargestellt. Dieses unterscheidet sich von dem ersten Ausführungsbeispiel der Fig. 1 dadurch, dass im Bereich des weiteren Fahrabschnitts B ausgehend von der aktuellen Position P₃ des Düngerstreuers 4 ein vorbestimmter Fahrweg V ermittelt wird und dadurch für die zukünftige Position P₄ eine Überschreitung eines zulässigen Düngemittelgrenzwerts vorausgesagt wird.

Zunächst wird über das satellitengestützte Ortungssystem für die Position P₃, wie zuvor in Bezug auf Fig. 1 beschrieben, die Position und Orientierung des Düngerstreuers 4 ermittelt. Darüber hinaus liegt im Bordcomputer der Zugmaschine 3 eine entsprechende Karte des Feldes 1 mit den Fahrgassen bzw. den Fahrabschnitten A und B vor. Dadurch kann ausgehend von der aktuellen Position P₃ die zukünftige Position P₄ vorausgesagt werden. Darüber hinaus kann angenommen werden, dass die an der Position P₄ vorliegende Verteilcharakteristik 5d der aktuellen Verteilcharakteristik 5c entspricht. Alternativ ist auch denkbar, dass mittels eines Planungstools eine auf den Übergangsbereich zum Vorgewende 1a angepasste Verteilcharakteristik berechnet wird.

Zu sehen ist auch, dass sich die vorherbestimmte Verteilcharakteristik 5d mit der vergangenen Verteilcharakteristik 5a des Vorgewendes 1 a im Bereich der Überlappungszone 6 überschneidet. Daraus wird nun eine Vorhersage ermittelt, dass der zulässige Düngemittelgrenzwert im Bereich der Zone 7 überschritten wird. Um dies zu verhindern kann beispielsweise mit dem Bordcomputer der Zugmaschine 3 eine günstigere Verteilcharakteristik berechnet werden, mit der der zulässige Düngemittelgrenzwert nicht mehr überschritten wird. Der Düngerstreuer 4 wird daraufhin automatisch so gesteuert, dass auf einfache Weise Umweltschäden oder eine Überschreitung von gesetzlichen Grenzwerten verhindert werden.

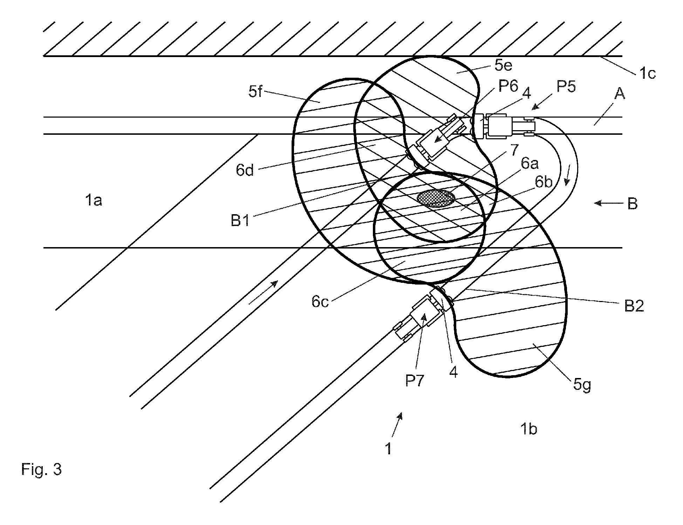

In der Fig. 3 ist ein drittes Ausführungsbeispiel des Verfahrens zur Ausbringung von Dünger auf dem Feld 1 mit dem Düngerstreuer 4 dargestellt. Zu sehen ist einerseits der Düngerstreuer 4 an der Position P₅ beim Befahren des ersten Fahrabschnitts A. Hierbei ist die Verteilcharakteristik 5e zum Grenzstreuen entlang der Feldgrenze 1 c aktiviert.

Des Weiteren ist der Düngerstreuer 4 im Bereich des Teilabschnitts B₁ an der Position P₆ mit der Verteilcharakteristik 5f gezeigt. Bei der Fahrt entlang des Fahrabschnitt B₁ wird für die Überlappungszonen 6a und 6d fortwährend die akkumulierte Düngermenge ermittelt und beim Überschreiten des zulässigen Düngemittelgrenzwerts ein entsprechendes Warnsignal an die Bedienperson ausgegeben und die Düngung automatisch abgeschaltet.

Darüber hinaus wird nach dem Wendemanöver im Bereich des Fahrabschnitts B₂, beispielsweise an der Position P₇, zusätzlich die akkumulierte Düngemenge im Bereich der Überlappungszonen 6a - 6c berechnet. Zu sehen ist, dass sich im Bereich der Überlappungszone 6a alle drei Verteilcharakteristika 5e - g der Fahrabschnitte A, B₁ und B₂ überschneiden. Folglich muss hier die akkumulierte Düngermenge von drei Fahrabschnitten berechnet und darauf basierend beim Überschreiten des zulässigen Düngemittelgrenzwerts in einer der Überlappungszonen 6a - d ein entsprechendes Warnsignal angezeigt und die Düngung automatisch abgeschaltet. Denkbar ist auch, die Verteilcharakteristik des Düngerstreuers 4 entsprechend zu ändern.

Damit das Verfahren besonders sicher arbeitet, wird das Feld 1, wie zuvor in Bezug auf Fig. 1 beschrieben, in eine Vielzahl von Flächenelementen unterteilt und fortwährend die akkumulierte Düngermenge in jedem Flächenelement berechnet. Dadurch ist es nicht notwendig, entsprechende Überlappungszonen zu verfolgen, sondern es kann eine Überschreitung des Düngemittelgrenzwerts jeweils in den einzelnen Flächenelementen überwacht werden.

Des Weiteren sind die Bordcomputer der landwirtschaftlichen Zugmaschinen 3 zur Durchführung des Verfahrens nach wenigstens einem der Ansprüche 1 - 7 bzw. der zuvor in Bezug auf die Fig. 1 - 3 beschriebenen Verfahren ausgebildet und verfügen über einen Bildschirm zur Anzeige des Warnsignals, einem Steuermodul zur automatischen Anpassung der Verteilcharakteristik und zur Abschaltung des Düngerstreuers.

Dadurch kann das zuvor beschriebene Verfahren als Computerprogramm besonders einfach und effizient ausgeführt werden.

Es versteht sich, dass in den zuvor beschriebenen Ausführungsbeispielen genannte Merkmale nicht auf diese spezielle Kombinationen beschränkt sind und auch in beliebigen anderen Kombinationen möglich sind.

## Patentansprüche

1. Verfahren zur Ausbringung von Dünger auf einem Feld (1) mit einem Düngerstreuer (4), wobei für einen ersten Fahrabschnitt (A) die ausgebrachte Düngermenge ortsabhängig aufgezeichnet wird, **dadurch gekennzeichnet, dass** für einen weiteren Fahrabschnitt (B) in wenigstens einer Überlappungszone (6) mit dem ersten Fahrabschnitt (A) eine akkumulierte Düngermenge berechnet wird,
und dass beim Überschreiten eines zulässigen Düngemittelgrenzwerts in der Überlappungszone (6) einer Bedienperson ein Warnsignal angezeigt und/oder die Verteilcharakteristik (5a - 5g) des Düngerstreuers (4) automatisch angepasst oder die Düngung automatisch abgeschaltet wird.

2. Verfahren nach Anspruch 1, wobei bei der Aufzeichnung der ausgebrachten Düngermenge die Verteilcharakteristik (5a - 5g), der Ort (P₁ - P₇) und/oder die Orientierung des Düngerstreuers (4) auf dem Feld (1) zeitauflösend aufgezeichnet und daraus die ausgebrachte Düngermenge berechnet wird.

3. Verfahren nach Anspruch 1 oder 2, wobei bei der Aufzeichnung der ausgebrachten Düngermenge der Ort (P₁ - P₇) und/oder die Orientierung des Düngerstreuers (4) auf dem Feld (1) mit einem satellitengestützten Ortungssystem erfasst wird.

4. Verfahren nach Anspruch 3, wobei das satellitengestützte Ortungssystem die Positionskoordinaten einer landwirtschaftlichen Zugmaschine (3) erfasst und über einen Korrekturvektor (K) der Ort (P₁ - P₇) und/oder die Orientierung des Düngerstreuers (4) berechnet wird.

5. Verfahren nach wenigstens einem der vorangegangenen Ansprüche, wobei die akkumulierte Düngermenge in der Überlappungszone (6) über einen vorherbestimmten Fahrweg (V) und eine vorherbestimmte Verteilcharakteristik (5d) des Düngerstreuers (4) berechnet wird.

6. Verfahren nach Anspruch 5, wobei das Überschreiten des zulässigen Düngemittelgrenzwerts für die Überlappungszone (6) vorherbestimmt und der Bedienperson als Vorhersage angezeigt wird.

7. Verfahren nach wenigstens einem der vorangegangenen Ansprüche, wobei der Düngerstreuer (4) ein Zentrifugalstreuer ist, der insbesondere den Dünger aus einem Vorratsbehälter mittels einer Schleuderscheibe auf dem Feld (1) ausbringt.

8. Bordcomputer für eine landwirtschaftliche Zugmaschine, der zur Durchführung des Verfahrens nach wenigstens einem der Ansprüche 1 - 7 ausgebildet ist.

9. Bordcomputer nach Anspruch 8 mit einem Anzeigeelement zur Anzeige des Warnsignals und/oder einem Steuermodul zur automatischen Anpassung der Verteilcharakteristik (5a - 5g) und/oder zur automatischen Abschaltung des Düngerstreuers (4) ausgebildet ist.
